# EUROPEAN PATENT SPECIFICATION

(11) **EP 1 729 444 B1**
(45) Date of publication and mention of the grant of the patent: **30.06.2010**
(21) Application number: 05757337.0
(22) Date of filing: 08.06.2005
(51) Int. Cl.: H04L 12/24

(54) **A SNMP-BASED ASYNCHRONOUS COMMUNICATION MECHANISM PROCESS METHOD**
VERFAHREN ZUR VERWALTUNG EINES SNMP- BASIERTEN SYNCHRONEN KOMMUNIKATIONSMECHANISMUS
PROCEDE DE GESTION D'UN MECANISME DE COMMUNICATION ASYNCHRONE BASE SUR SNMP

(30) Priority: 08.06.2004 CN 200410048650
(43) Date of publication of application: 06.12.2006
(73) Proprietor: Huawei Technologies Co., Ltd., Longgang District, Shenzhen Guangdong 518129 (CN)
(72) Inventor: LIU, Guangwei, Huawei Administration Building, Guangdong (CN)
(74) Representative: Reinhard - Skuhra - Weise & Partner GbR
(86) International application number: PCT/CN2005/000813
(87) International publication number: WO 2005/122471

(56) References cited:
- CN-A- 1 350 385
- CN-A- 1 494 682
- CN-A- 1 549 499
- US-A1- 5 991 806
- US-A1- 2004 006 619
- US-B1- 6 697 845
- DAVE THALER MICROSOFT CORPORATION SATYEN CHANDRAGIRI LUCENT TECHNOLOGIES SUBTREE RETRIEVAL MIB: "Subtree Retrieval MIB" IETF STANDARD-WORKING-DRAFT, INTERNET ENGINEERING TASK FORCE, IETF, CH, no. 1, November 2000 (2000-11), XP015030220 ISSN: 0000-0004
- MAURICIO ARANGO RSL COM ANDREW DUGAN LEVEL3 COMMUNICATIONS ISAAC ELLIOTT LEVEL3 COMMUNICATIONS CHRISTIAN HUITEMA TELCORDIA SCOTT P: "Media Gateway Control Protocol (MGCP)" IETF STANDARD-WORKING-DRAFT, INTERNET ENGINEERING TASK FORCE, IETF, CH, no. 2, 29 July 1999 (1999-07-29), XP015014685 ISSN: 0000-0004
- HARDAKER NETWORK ASSOCIATES LABORATORIES W: "Object Oriented Protocol Operations for the Simple Network Management Protocol draft-ietf-eos-oops-00.txt" IETF STANDARD-WORKING-DRAFT, INTERNET ENGINEERING TASK FORCE, IETF, CH, vol. eos, February 2003 (2003-02), XP015001855 ISSN: 0000-0004

## Description

### Field of the Invention

The present invention relates to the field of communication technologies, and more particularly, to a method for processing asynchronous communication mechanism processing based on Simple Network Management Protocol (SNMP).

### Background of the Invention

Along with the rapid development of network technology, numbers and scales of networks are becoming lager and lager. Devices in the networks are from various different manufactures, so it is very important to manage these devices. For this purpose, the Internet Engineering Task Force (IETF) defined the Simple Network Management Protocol (SNMP). The SNMP is independent from protocols of lower layers, so it is not only adopted in the Internet, but also adopted in other various networks such as a telephone network.

The network management entity based on SNMP includes two parts; a network management station and a managed network unit; and the managed network unit is also called a managed device. An SNMP manager module, abbreviated as a manager module hereinafter, is run at the network management station, and an SNMP agent module, abbreviated as an agent module hereinafter, is run at the managed device. The network management station can implement management functions such as monitoring the state of the managed device, modifying the configurations of the managed device and receiving network event alarms through interactions between the manager module and the agent module.

There are two approaches that can be employed to implement communication between the manager module and the agent module. According to one approach, the manager module transmits a request to the agent module to query or to configure some detailed parameter values, and the agent module returns the corresponding data in response to the request or sets the value of the managed object; according to the other approach, in the case that the manager module does not transmit any request, the agent module reports on its own initiative to the manager module that some certain events have occurs.

At present, the SNMP has three versions: V1, V2 and V3. The V1 version defines five types of massages: GET-REQUEST, GET-NEXT-REQUEST, SET-REQUEST, GET-RESPONSE and TRAP. The V2 version of SNMP adds a GET-BULK-REQUEST message and an INFORM-REQUEST message based on the V1 version. The V3 version adds a user-oriented processing security mechanism based on the V2 version, without adding any new message.

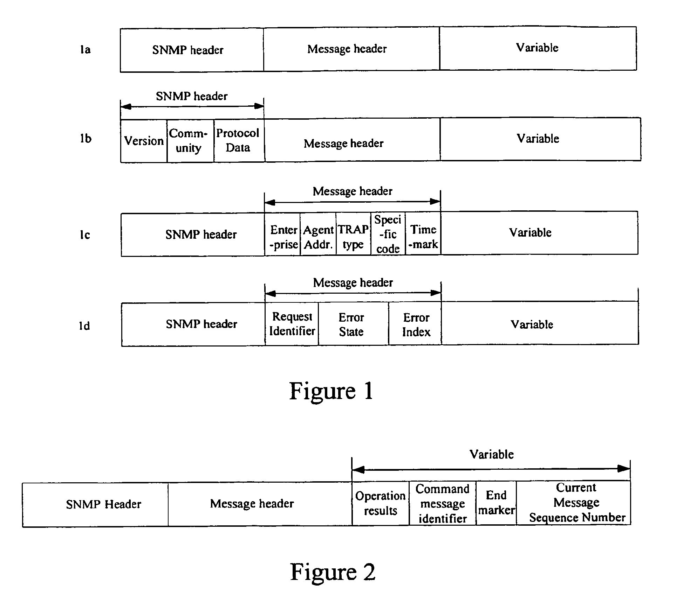

Referring to Figure 1a and Figure 1b, the SNMP message includes three parts: a public SNMP header, a message header and a variable. Moreover, the public SNMP headers of all the SNMP messages are uniform, i.e. the public SNMP headers of all the SNMP messages include three fields: Version, Community and Protocol Data Unit Type. Referring to Figure 1c and Figure 1d, in the five messages defined by V1 version of SNMP, the message header of the TRAP message includes five fields: Enterprise, Agent Address, TRAP Type, Specific Code and Timestamp; and the message headers of the other four request messages include three fields: Request Identifier, Error State and Error Index. The variable part can carry content information or user-defined meanings of the related fields.

The SNMP adopts an asynchronous Client/Server method. Specifically, according to the asynchronous Client/Server method, the manager module transmits an operation command message, such as GET-REQUEST, GET-NEXT-REQUEST, SET-REQUEST or GET-RESPONSE to the agent module; on receiving the message, the agent module does not respond the manager module directly, but transmits a response to the manager module with a TRAP message after a period of time.

In the prior SNMP protocol applications, there are two solutions for transmitting the response according to different types of command messages.

In accordance with the first solution, an asynchronous mode is adopted to feed back the results. For example, the SNMP manager module transmits a SET-REQUEST command; the agent module checks the command, if the command is determined as a command in need of an asynchronous notification, the agent module directly feeds back a piece of information of "the operation has been performed" in the response message for SET-REQUEST; after the operation results are generated, the agent module transmits to the manager module a TRAP message, carrying the operation results; on receiving the TRAP message, the manager module performs task identification to the TRAP message, i.e. determines whether the object identifier, the error code and the operation results saved by the manager module are consistent with the object identifier, the error code and the operation results in the variable binding list of the TRAP message; if the object identifier, the error code and the operation results saved by the manager module are consistent with the object identifier, the error code and the operation results in the variable binding list of the TRAP message, the manager module identifies the request message that the TRAP message corresponds to, and then displays the operation results carried in the TRAP message to the user.

At present, since the task identification mechanism to the TRAP message has not been defined, in the first solution, the manager module needs to seriatim identify and match the command words and the operation entity parameters in the TRAP messages. In this way, there may be multiple TRAP messages with a same matching content, so that the matching is not accurate; and the contents of the messages need to be compared one by one, so that the efficiency is relatively low.

The second solution is applicable for some certain request commands in need of that the agent module feeds back for several times. The SNMP prescribes that the request commands and the responses corresponding to the request commands must be one-to-one correspondent. After receiving the request command of the manager module, if the agent module cannot obtain all the operation results within the stated time, it is possible that the agent module only responds a part of the operation results corresponding to the request command; hereafter, if the agent module obtains another part of the operation results corresponding to the request command, and if the manager module does not transmit the request command repeatedly, the agent module can not transmit this part of the operation results to the manager module.

For example, when some files are transferred with File Transfer Protocol (FTP), the SNMP manager must transmit a query command periodically to make the agent feed back the file transport pace in time.

For the second solution, since it is necessary that multiple bidirectional message interaction between the manager module and the agent module should be performed, the efficiency is relatively low and real-time performance is not good. Moreover, if the time interval of the manager module transmitting the query to the agent module is shortened to enhance the real-time performance, it is possible that the agent module has not obtained the following operation results at all because the time interval is too short, which will possibly result in an invalid query.

Document "Subtree Retrieval MIB" proposed by DAVE THALER MICROSOFT CORPORATION SATYEN CHANDRAGIRI LUCENT TECHNOLOGIES SUBTREE RETRIEVAL MIB also describes a Management Information Base (MIB) that can be used by an application to retrieve MIB information in a more efficient way without any change to the SNMP protocol or SNMP protocol engines. Document EP1372078 A1 discloses that a device to be operated may generate Trap including a request ID that indicate a block request, and sends the Trap to an operation system when completing the block processing.

### Summary of the Invention

In view of this, the present invention provides a method for processing asynchronous communication mechanism based on Simple Network Management Protocol to make the manager unit identify the TRAP messages easily and accurately, and to improve the identification efficiency.

The technical solution in accordance with the embodiments of the present invention is as follows:
A method for processing a communication based on SNMP, includes:
   receiving, by an agent module, an operation command message transmitted by a manager module,
   determining, by the agent module, whether the operation command message is in need of an asynchronous notification, if the operation command message is in need of the asynchronous notification, informing the manager module that the operation command message has been performed,
   obtaining, by the agent module, a command message identifier corresponding to the operation command message, and
   transmitting a TRAP massage including the command message identifier, an operation result corresponding to the operation command message to the manager module, an end mark indicating whether the TRAP message is the last message for the operation command message, and a current message sequence number expressing a sequence number of the TRAP message relating to the operation command message.
A method for a communication based on SNMP, includes:
   transmitting, by a manager module, an operation command message to an agent module;
   receiving, by the manager module, information from the agent module that the operation command message has been performed, if the agent module determines (303-304) that the operation command message is in need of an asynchronous notification;
   receiving, by the manager module, a TRAP message including a command message identifier, an operation result corresponding to the operation command message from the agent module, wherein the command message identifier corresponds to the operation command message, an end mark indicating whether the TRAP message is the last message for the operation command message, and a current message sequence number expressing a sequence number of the TRAP message relating to the operation command message; and
   identifying, by the manager module, the operation command message corresponding to the operation result via the command message identifier.
An agent module for a communication based on SNMP includes:
   a first module, configured to receive an operation command message transmitted by a manager module,
   a second module, configured to determine whether the operation command message is in need of an asynchronous notification before obtaining the command message identifier corresponding to the operation command message, if the operation command message is in need of the asynchronous notification, inform the manager module that the operation command message has been performed,
   a third module, configured to obtain a command message identifier corresponding to the operation command message, and
   a fourth module, configured to transmit a TRAP massage including the command message identifier, an operation result corresponding to the operation command message to the manager module, an end mark indicating whether the TRAP message is the last message for the operation command message, and a current message sequence number expressing a sequence number of the TRAP message relating to the operation command message.
A manager module for a communication based on SNMP includes:
   a first module, configured to send an operation command message to an agent module,
   a second module, configured to receive information from the agent module that the operation command message has been performed, if the agent module determines (303-304) that the operation command message is in need of an asynchronous notification,
   a third module, configured to receive a TRAP massage including a command message identifier, an operation result corresponding to the operation command message from the agent module, an end mark indicating whether the TRAP message is the last message for the operation command message, and a current message sequence number expressing a sequence number of the TRAP message relating to the operation command message; wherein the command message identifier corresponds to the operation command message; and
   a fourth module, configured to identify the operation command message corresponding to the operation result via the command message identifier.

It could be discovered through comparison that the difference between the technical solution of the present invention and the prior art is that, three fields: the command message identifier, the end mark and the current message sequence number are defined in the content of the TRAP message. The command message identifier is used for accurately matching the long time-operated command message and the TRAP message responding the command message, the combination of the above-mentioned fields can realize multiple feedbacks to one command message.

The difference of the technical solution brings effects that the accurate matching of the command message and the TRAP response message can improve the performance efficiency and the reliability of the message matching, and that the multiple responses to the same command can reduce the times of message interactions and save network bandwidth.

### Brief Description of the Drawings

Figure 1 includes four parts: 1a, 1b, 1c and 1d, wherein, Figure 1a illustrates the prior SNMP message format; Figure 1b is the format of an SNMP header; Figure 1c illustrates the format of a message header in a TRAP message; Figure 1d illustrates the format of a message header in GET-REQUEST, GET-NEXT-REQUEST, SET-REQUEST, and GET-RESPONSE;
Figure 2 illustrates the format of a variable part in an SNMP message in accordance with the embodiment of the present invention;
Figure 3 is a schematic diagram illustrating the process in accordance with the embodiment of the present invention;
Figure 4 is a message sequence chart illustrating an embodiment according to the method for processing asynchronous communication mechanism based on SNMP.

### Detailed Description of the Invention

The present invention will be further described in detail hereinafter with reference to the accompanying drawings and embodiments to make the technical solution and the merits of the present invention clearer.

The key idea of the present invention includes: allocating TRAP messages identifiers for different operation command messages; on receiving an operation command message transmitted by a manager module, an agent module determines whether the operation command is in need of an asynchronous notification; if the operation command is in need of the asynchronous notification, the agent module will inform the manager module that the operation command has been performed; on receiving the information, the manager module waits for the agent module to feed back operation results, and hereafter, the agent module transmits some TRAP messages, carrying the command message identifier corresponding to the operation command message, to the manager module in order to feed back the operation results to the manager module.

Moreover, the TRAP identifiers allocated for different operation command messages can be saved in the manager module and the agent module simultaneously, and also can be saved in a physical entity that communicates with the manager module and the agent module.

The Request Identifier field in the prior operation command message can be used to identify the current operation command message, while there is not any field in the TRAP message to indicate which operation command message the current TRAP message corresponds to. According to the embodiment of the present invention, a field in the variable part of the TRAP message, i.e. a command message identifier, is defined for the manager module to identify which operation command message the current TRAP corresponds to. In other words, a field can be defined in the variable part of the TRAP message as the identifiers of the TRAP messages corresponding to different operation command messages. The content of the field is called a command message identifier. A mapping relationship between the request identifiers and the command message identifiers is also set in advance. According to the mapping relationship, the agent module allocates the command message identifier in the TRAP message that is fed back from the agent module to the manager module, while the manager module determines which operation command message the received TRAP message corresponds to.

Since the agent module needs to feed back multiple TRAP messages for one operation command message of the manager module, a current message sequence number field and an end mark field are set in the variable part of the TRAP message. The current message sequence number is used for indicating the sequence number of the TRAP message corresponding to one GET-REQUEST, and the end mark is used for indicating whether there is any following TRAP message to be reported.

On receiving the TRAP message containing the command message identifier, according to the mapping relationship between the request identifiers and the command message identifiers, the current message sequence number and the end mark, the manager module obtains the request identifier corresponding to the command message identifier in the TRAP message, and accordingly identifies the operation command message corresponding to the TRAP message; moreover, the manager module processes the current TRAP message according to the current message sequence number, and determines whether the operation results corresponding to the operation command message are all reported according to the end mark in the TRAP message.

Referring to Figure 2, three variable bindings are added in the variable binding aggregate in the variable part of the TRAP message, which are the command message identifier, the current message sequence number and the end mark. All of the three fields can be expressed by an integer variable. The request identifier and the corresponding command message identifier can be uniform for convenience of identification, i.e. the command message identifier in the TRAP message corresponding to the operation command massage can be set as same as the request identifier in the operation command message. In this way, according to the command message identifier, the manager module can directly determine which operation command message the TRAP message corresponds to.

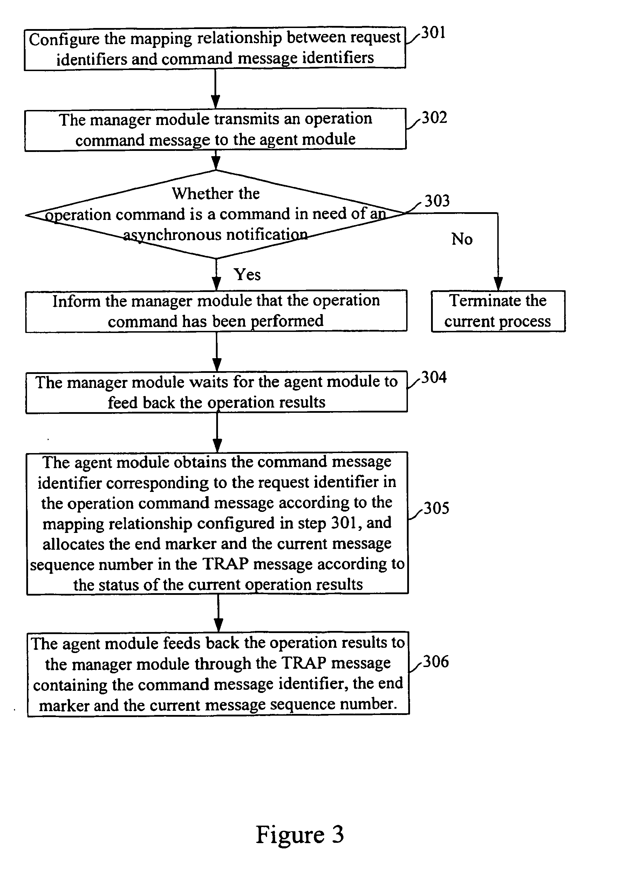

As shown in Figure 3, the method according to the embodiment of the present invention includes the following steps.

Step 301: the mapping relationship between request identifiers and command message identifiers is configured.

Step 302: the manager module transmits an operation command message to the agent module.

Step 303: on receiving the operation command message, the agent module determines whether the operation command is in need of an asynchronous notification; if the operation command is in need of an asynchronous notification , the agent module informs the manager module that the operation command has been performed, otherwise, terminates the flow;

Step 304: the manager module waits for the agent module to feed back the operation results.

Step 305: the agent module obtains the command message identifier corresponding to the request identifier carried in the operation command message according to the mapping relationship configured in step 301, and allocates the end mark and the current message sequence number in the TRAP message according to the status of the current operation results.

Step 306: the agent module feeds back the operation results to the manager module through the TRAP message containing the command message identifier, the end mark and the current message sequence number.

Step 307: on receiving the TRAP message, the manager module obtains the request identifier corresponding to the command message identifier carried in the TRAP message according to the mapping relationship, and identifies the operation command message corresponding to the TRAP message; moreover, the manager module processes the current message according to the current message sequence number, and determines whether the operation results have all been reported according to the end mark in the TRAP message, if the report is not finished, returns to step 304.

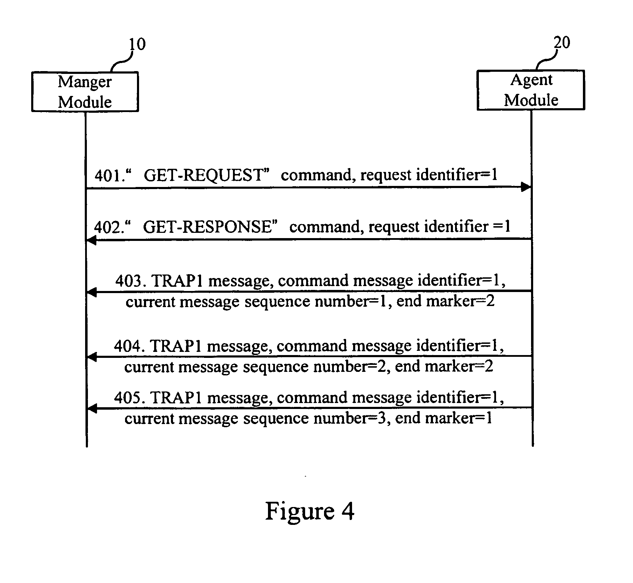

Figure 4 is a message sequence chart illustrating an embodiment according to the method for processing asynchronous communication mechanism based on SNMP.

In this embodiment, the following conventions are supposed.

If the request identifier carried in the GET-REQUEST is 1, the command message identifier carried in the TRAP message is also allocated as 1. If the current message sequence number in the TRAP message is 1, the current TRAP message is the first TRAP message generated by the agent module for one GET-REQUEST; if the current message sequence number is 2, the current TRAP message is the second TRAP message generated by the agent module for one GET-REQUEST, and the rest can be deduced by analogy. If the end mark is 1, there is no following TRAP message for the same GET-REQUEST; while if the end mark is 2, there is a following TRAP message for the same GET-REQUEST. In practical applications, the detailed values are not limited to the above-mentioned embodiment, and the values can be configured according to the demands of the users. As shown in Figure 4, the detailed implementation of the method in accordance with the embodiment of the present invention includes the following steps.

Step 401, the manager module 10 transmits a GET-REQUEST command to the agent module 20, requesting to obtain certain management information, e.g. a file transport pace of FTP. The request identifier in the GET-REQUEST command is 1, indicating that the message is the first command transmitted from the manager module 10 to the agent module 20.

Step 402: the agent module 20 analyzes the received GET-REQUEST command, if the agent module 20 finds that multiple feedback responses need to be returned, the agent module 20 returns a GET-REQUEST response to the manager module 10 at once to inform the manager module 20 that the command has been performed. The request identifier in the response is also 1, indicating that the response is for the command whose request identifier is 1.

Step 403: on obtaining a part of management information, the agent module 20 transmits the first TRAP message to the manager module 10. The command message identifier in the variable part of the TRAP message is 1, the current message sequence number field is 1 and the end mark is 2.

It needs to be explained that, the command message identifier is an integer variable; and if the value of the command message identifier is 1, the current TRAP message is a response to the GET-REQUEST command whose request identifier is 1. It should be noted that since no request identifier is defined in the message header of the TRAP message, the command message identifier field is defined in the variable part to match the TRAP message to its corresponding command message. The command message identifier of the TRAP message has the value of the request identifier of the command that the TRAP message corresponds to. The current message sequence number is an integer variable; and if the value of the current message sequence number is 1, the TRAP message is the first message of the multiple feedbacks for the GET-REQUEST command. The end mark is also an integer variable; and if the value of the end mark is 2, the feedback is not finished, and the following TRAP messages will be sent unceasingly.

Step 404, on obtaining another part of management information, the agent module 20 transmits the second TRAP message to the manager module 10. The command message identifier in the variable part of the TRAP message is 1, the current message sequence number is 2, and the end mark is 2. As explained in Step 403, the current TRAP message is the second TRAP feedback to the command whose request identifier is 1, and the following TRAP messages will be fed back unceasingly.

Step 405, on receiving all the rest management information, the agent module 20 transmits the third TRAP message to the manager module 10. The command message identifier in the variable part of the TRAP message is 1, the current message sequence number is 3, and the end mark is 1. As explained in step 403, the current TRAP message is the third TRAP feedback to the command whose request identifier is 1, and there is no following TRAP message.

Thus, the whole interaction process between the manager module 10 and the agent module 20 comes to an end. It can be seen from the above-mentioned solution that, the method in accordance with the embodiment of the present invention achieve the convenient matching and the message sorting by defining three fields with specific meanings: the command identifier, the end mark and the current message sequence number. Moreover, the mechanism defined in accordance with the embodiment of the present invention can effectively reduce message interactions in the case that multiple feedbacks are needed. The manager module can determine whether all the operation results have been reported every time the manager module receives the feedback message; if all the operation results have not been reported, the manager module only needs to keep on waiting instead of retransmitting the command to query the results. In a general way, according to the solution, when the number of the feedback messages for one command is N, the number of the interactive messages that can be reduced is N-1.

The present invention has been illustrated and described with reference to some preferable embodiments of the present invention, but those skilled in the art should understand that various changes of equivalent parts to the format and the details of the invention can be made within the scope of the present invention as defined by the appended claims.

## Claims

1. A method for a communication based on Simple Network Management Protocol, SNMP, comprising:
receiving (302), by an agent module, an operation command message transmitted by a manager module;
determining (303-304), by the agent module, whether the operation command message is in need of an asynchronous notification, if the operation command message is in need of the asynchronous notification, informing the manager module that the operation command message has been performed;
obtaining (305), by the agent module, a command message identifier corresponding to the operation command message; and
transmitting (306), by the agent module, a TRAP massage including the command message identifier, an operation result corresponding to the operation command message to the manager module, an end mark indicating whether the TRAP message is the last message for the operation command message, and a current message sequence number expressing a sequence number of the TRAP message relating to the operation command message.

2. The method according to claim 1, wherein the command message identifier corresponds to a request identifier carried in the operation command message.

3. The method according to claim 2, wherein a command message identifier field is added in a variable binding list of a variable part in the TRAP message to carry the command message identifier.

4. The method according to claim 1, wherein the end mark and the current message sequence number are contained in a variable binding aggregate of a variable part in the TRAP message.

5. A method for a communication based on Simple Network Management Protocol, SNMP, comprising:
transmitting (302), by a manager module, an operation command message to an agent module;
receiving, by the manager module, information from the agent module that the operation command message has been performed, if the agent module determines (303-304) that the operation command message is in need of an asynchronous notification;
receiving, by the manager module, a TRAP message including a command message identifier, an operation result corresponding to the operation command message from the agent module, an end mark indicating whether the TRAP message is the last message for the operation command message, and a current message sequence number expressing a sequence number of the TRAP message relating to the operation command message, wherein the command message identifier corresponds to the operation command message; and
identifying, by the manager module, the operation command message corresponding to the operation result via the command message identifier.

6. An agent module for a communication based on Simple Network Management Protocol, SNMP, comprising:
a first module, configured to receive an operation command message transmitted by a manager module;
a second module, configured to determine whether the operation command message is in need of an asynchronous notification before obtaining the command message identifier corresponding to the operation command message, if the operation command message is in need of the asynchronous notification, inform the manager module that the operation command message has been performed;
a third module, configured to obtain a command message identifier corresponding to the operation command; and
a fourth module, configured to transmit a TRAP massage including the command message identifier, an operation result corresponding to the operation command message to the manager module, an end mark indicating whether the TRAP message is the last message for the operation command message, and a current message sequence number expressing a sequence number of the TRAP message relating to the operation command message.

7. A manager module for a communication based on Simple Network Management Protocol, SNMP, comprising:
a first module, configured to transmit an operation command message to an agent module;
a second module, configured to receive information from the agent module that the operation command message has been performed, if the agent module determines that the operation command message is in need of an asynchronous notification;
a third module, configured to receive a TRAP massage including a command message identifier, an operation result corresponding to the operation command message from the agent module, an end mark indicating whether the TRAP message is the last message for the operation command message, and a current message sequence number expressing a sequence number of the TRAP message relating to the operation command message; wherein the command message identifier corresponds to the operation command message; and
a fourth module, configured to identify the operation command message corresponding to the operation result via the command message identifier.

## Patentansprüche

1. Verfahren für eine Kommunikation auf der Basis des Simple Network Management Protocol SNMP mit den folgenden Schritten:
ein Agent-Modul empfängt (302) eine von einem Manager-Modul gesendete Operationsbefehlsnachricht;
das Agent-Modul bestimmt (303-304), ob die Operationsbefehlsnachricht eine asynchrone Benachrichtigung benötigt, wenn die Operationsbefehlsnachricht die asynchrone Benachrichtigung benötigt, wird das Manager-Modul informiert, dass die Operationsbefehlsnachricht durchgeführt wurde;
das Agent-Modul erhält (305) eine der Operationsbefehlsnachricht entsprechende Befehlsnachrichtenkennung; und
das Agent-Modul sendet (306) eine TRAP-Nachricht, die die Befehlsnachrichtenkennung und ein der Operationsbefehlsnachricht entsprechendes Operationsergebnis enthält, zu dem Manager-Modul, wobei eine Endemarkierung angibt, ob die TRAP-Nachricht die letzte Nachricht für die Operationsbefehlsnachricht ist, und eine aktuelle Nachrichtensequenznummer eine Sequenznummer der TRAP-Nachricht in Bezug auf die Operationsbefehlsnachricht ausdrückt.

2. Verfahren nach Anspruch 1, wobei die Befehlsnachrichtenkennung einer in der Operationsbefehlsnachricht geführten Anforderungskennung entspricht.

3. Verfahren nach Anspruch 2, wobei ein Befehlsnachrichtenkennungsfeld in einer Liste variabler Bindungen eines variablen Teils in der TRAP-Nachricht hinzugefügt wird, um die Befehlsnachrichtenkennung zu führen.

4. Verfahren nach Anspruch 1, wobei die Endemarkierung und die aktuelle Nachrichtensequenznummer in einem Aggregat variabler Bindungen eines variablen Teils in der TRAP-Nachricht enthalten sind.

5. Verfahren für eine Kommunikation auf der Basis des Simple Network Management Protocol SNMP mit den folgenden Schritten:
ein Manager-Modul sendet (302) eine Operationsbefehlsnachricht zu einem Agent-Modul;
das Manager-Modul empfängt Informationen von dem Agent-Modul, dass die Operationsbefehlsnachricht durchgeführt wurde, wenn das Agent-Modul bestimmt (303-304), dass die Operationsbefehlsnachricht eine asynchrone Benachrichtigung benötigt;
das Manager-Modul empfängt eine TRAP-Nachricht, die eine Befehlsnachrichtenkennung und ein der Operationsbefehlsnachricht entsprechendes Operationsergebnis enthält, von dem Agent-Modul, wobei eine Endemarkierung angibt, ob die TRAP-Nachricht die letzte Nachricht für die Operationsbefehlsnachricht ist, und eine aktuelle Nachrichtensequenznummer eine Sequenznummer der TRAP-Nachricht in Bezug auf die Operationsbefehlsnachricht ausdrückt, wobei die Befehlsnachrichtenkennung der Operationsbefehlsnachricht entspricht; und
das Manager-Modul identifiziert die Operationsbefehlsnachricht, die dem Operationsergebnis entspricht, über die Befehlsnachrichtenkennung.

6. Agent-Modul für eine Kommunikation auf der Basis des Simple Network Management Protocol SNMP, umfassend:
ein erstes Modul, das dafür ausgelegt ist, eine durch ein Manager-Modul gesendete Operationsbefehlsnachricht zu empfangen;
ein zweites Modul, das dafür ausgelegt ist zu bestimmen, ob die Operationsbefehlsnachricht eine asynchrone Benachrichtigung benötigt, bevor die Befehlsnachrichtenkennung erhalten wird, die der Operationsbefehlsnachricht entspricht, und wenn die Operationsbefehlsnachricht die asynchrone Benachrichtigung benötigt, das Manager-Modul zu informieren, dass die Operationsbefehlsnachricht durchgeführt wurde;
ein drittes Modul, das dafür ausgelegt ist, eine Befehlsnachrichtenkennung zu erhalten, die dem Operationsbefehl entspricht; und
ein viertes Modul, das dafür ausgelegt ist, eine TRAP-Nachricht, die die Befehlsnachrichtenkennung und ein der Operationsbefehlsnachricht entsprechendes Operationsergebnis enthält, zu dem Manager-Modul zu senden, wobei eine Endemarkierung angibt, ob die TRAP-Nachricht die letzte Nachricht für die Operationsbefehlsnachricht ist, und eine aktuelle Nachrichtensequenznummer eine Sequenznummer der TRAP-Nachricht in Bezug auf die Operationsbefehlsnachricht ausdrückt.

7. Manager-Modul für eine Kommunikation auf der Basis des Simple Network Management Protocol SNMP, umfassend:
ein erstes Modul, das dafür ausgelegt ist, eine Operationsbefehlsnachricht zu einem Agent-Modul zu senden;
ein zweites Modul, das dafür ausgelegt ist, Informationen von dem Agent-Modul zu empfangen, dass die Operationsbefehlsnachricht durchgeführt wurde, wenn das Agent-Modul bestimmt, dass die Operationsbefehlsnachricht eine asynchrone Benachrichtigung benötigt;
ein drittes Modul, das dafür ausgelegt ist, eine TRAP-Nachricht, die eine Befehlsnachrichtenkennung und ein der Operationsbefehlsnachricht entsprechendes Operationsergebnis enthält, von dem Agent-Modul zu empfangen, wobei eine Endemarkierung angibt, ob die TRAP-Nachricht die letzte Nachricht für die Operationsbefehlsnachricht ist, und eine aktuelle Nachrichtensequenznummer eine Sequenznummer der TRAP-Nachricht in Bezug auf die Operationsbefehlsnachricht ausdrückt; wobei die Befehlsnachrichtenkennung der Operationsbefehlsnachricht entspricht; und
ein viertes Modul, das dafür ausgelegt ist, die dem Operationsergebnis entsprechende Operationsbefehlsnachricht über die Befehlsnachrichtenkennung zu identifizierten.

## Revendications

1. Procédé de communication basé sur un Protocole de Gestion de Réseau Simple, SNMP, comprenant :
la réception (302), par un module agent, d'un message de commande d'opération transmis par un module gestionnaire ;
la détermination (303-304), par le module agent, si le message de commande d'opération nécessite ou non une notification asynchrone, si le message de commande d'opération nécessite une notification asynchrone, l'information du module gestionnaire de l'exécution du message de commande d'opération ;
l'obtention (305), par le module agent, d'un identifiant de message de commande correspondant au message de commande d'opération ; et
la transmission (306), par le module agent, d'un message PIEGE comportant l'identifiant de message de commande, un résultat d'opération correspondant au message de commande d'opération au module gestionnaire, une marque de fin indiquant si le message PIEGE est ou non le dernier message du message de commande d'opération, et un numéro de séquence de message courant exprimant un numéro de séquence du message PIEGE concernant le message de commande d'opération.

2. Procédé selon la revendication 1, dans lequel l'identifiant de message de commande correspond à un identifiant de requête acheminé dans le message de commande d'opération.

3. Procédé selon la revendication 2, dans lequel un champ d'identifiant de message de commande est ajouté à une liste liante variable d'une partie variable du message PIEGE afin d'acheminer l'identifiant de message de commande.

4. Procédé selon la revendication 1, dans lequel la marque de fin et le numéro de séquence de message courant sont contenus dans un agrégat liant variable d'une partie variable du message PIEGE.

5. Procédé de communication basé sur un Protocole de Gestion de Réseau Simple, SNMP, comprenant :
la transmission (302), par un module gestionnaire, d'un message de commande d'opération à un module agent ;
la réception, par le module gestionnaire, depuis le module agent de l'information que le message de commande d'opération a été exécuté, si le module agent détermine (303-304) que le message de commande d'opération nécessite une notification asynchrone ;
la réception, par le module gestionnaire, d'un message PIEGE comportant un identifiant de message de commande, un résultat d'opération correspondant au message de commande d'opération depuis le module agent, une marque de fin indiquant si le message PIEGE est ou non le dernier message du message de commande d'opération, et un numéro de séquence de message courant exprimant un numéro de séquence du message PIEGE concernant le message de commande d'opération, l'identifiant de message de commande correspondant au message de commande d'opération, ; et
l'identification, par le module gestionnaire, du message de commande d'opération correspondant au résultat d'opération par l'intermédiaire de l'identifiant de message de commande.

6. Module agent pour une communication basée sur un Protocole de Gestion de Réseau Simple, SNMP, comprenant :
un premier module, configuré pour recevoir un message de commande d'opération transmis par un module gestionnaire ;
un deuxième module, configuré pour déterminer si le message de commande d'opération nécessite ou non une notification asynchrone avant d'obtenir l'identifiant de message de commande correspondant au message de commande d'opération, si le message de commande d'opération nécessite une notification asynchrone, pour informer le module gestionnaire de l'exécution du message de commande d'opération ;
un troisième module, configuré pour obtenir un identifiant de message de commande correspondant à la commande d'opération ; et
un quatrième module, configuré pour transmettre un message PIEGE comportant l'identifiant de message de commande, un résultat d'opération correspondant au message de commande d'opération au module gestionnaire, une marque de fin indiquant si le message PIEGE est ou non le dernier message du message de commande d'opération, et un numéro de séquence de message courant exprimant un numéro de séquence du message PIEGE concernant le message de commande d'opération.

7. Module gestionnaire pour une communication basée sur un Protocole de Gestion de Réseau Simple, SNMP, comprenant :
un premier module, configuré pour transmettre un message de commande d'opération à un module agent ;
un deuxième module, configuré pour recevoir depuis le module agent l'information que le message de commande d'opération a été exécuté, si le module agent détermine que le message de commande d'opération nécessite une notification asynchrone ;
un troisième module, configuré pour recevoir un message PIEGE comportant un identifiant de message de commande, un résultat d'opération correspondant au message de commande d'opération depuis le module agent, une marque de fin indiquant si le message PIEGE est ou non le dernier message du message de commande d'opération, et un numéro de séquence de message courant exprimant un numéro de séquence du message PIEGE concernant le message de commande d'opération, l'identifiant de message de commande correspondant au message de commande d'opération ; et
un quatrième module, configuré pour identifier le message de commande d'opération correspondant au résultat d'opération par l'intermédiaire de l'identifiant de message de commande.
